(19) Europäisches Patentamt / European Patent Office / Office européen des brevets

(11) **EP 3 298 438 B1**

(12) **EUROPEAN PATENT SPECIFICATION**

(45) Date of publication and mention of the grant of the patent:
**01.05.2024   Bulletin 2024/18**

(21) Application number: **16797186.0**

(22) Date of filing: **18.05.2016**

(51) International Patent Classification (IPC):
**G01V 1/50** $^{(2006.01)}$     **G01V 1/37** $^{(2006.01)}$
**G01V 1/28** $^{(2006.01)}$     **G01V 1/30** $^{(2006.01)}$

(52) Cooperative Patent Classification (CPC):
**G01V 1/303;** G01V 1/282; G01V 1/305;
G01V 2210/121; G01V 2210/1295;
G01V 2210/1425; G01V 2210/169; G01V 2210/21;
G01V 2210/614; G01V 2210/6222

(86) International application number:
**PCT/US2016/032983**

(87) International publication number:
**WO 2016/187252 (24.11.2016 Gazette 2016/47)**

(54) **SURFACE WAVE TOMOGRAPHY USING SPARSE DATA ACQUISITION**

OBERFLÄCHENWELLENTOMOGRAFIE ANHAND DER ERFASSUNG VON VERSTREUTEN DATEN

TOMOGRAPHIE EN ONDES DE SURFACE UTILISANT L'ACQUISITION DE DONNÉES ÉPARSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.05.2015   US 201562164259 P**

(43) Date of publication of application:
**28.03.2018   Bulletin 2018/13**

(73) Proprietor: **ConocoPhillips Company Houston, Texas 77079 (US)**

(72) Inventors:
  • **KAZINNIK, Roman**
    **Houston, Texas 77096 (US)**
  • **DAVIDSON, Michael**
    **Houston, Texas 77079 (US)**
  • **TURA, Ali**
    **Houston, Texas 77079 (US)**
  • **JANSSEN, Aaron L.**
    **Houston, Texas 77079 (US)**
  • **MOSHER, Charles C.**
    **Houston, Texas 77079 (US)**
  • **DARNELL, Ronnie B.**
    **Anchorage, Alaska 99516 (US)**

(74) Representative: **Simpson, Paul Christopher ConocoPhillips (U.K.) Limited 20th Floor 1 Angel Court London EC2R 7HJ (GB)**

(56) References cited:
    GB-A- 2 467 326          US-A1- 2006 203 613
    US-A1- 2011 255 371      US-A1- 2012 043 091

• BRENGUIER F ET AL: "3-D surface wave tomography of the Piton de la Fournaise volcanousing seismic noise correlations", GEOPHSICAL RESEACH LETTERS, vol. 34, 1 January 2007 (2007-01-01), pages 1-5, XP002619880, ISSN: 0094-8276, DOI: 10.1029/2006GL028586

- **PICOZZI M ET AL: "Characterization of shallow geology by high-frequency seismic noise tomography", GEOPHYSICAL JOURNAL INTERNATIONAL, BLACKWELL SCIENTIFIC PUBLICATIONS, OXFORD, GB , vol. 176 1 January 2009 (2009-01-01), pages 164-174, XP002619878, ISSN: 0956-540X, DOI: 10.1111/J.1365-246X.2008.03966.X Retrieved from the Internet: URL:http://onlinelibrary.wiley.com/doi/10. 1111/j.1365-246X.2008.03966.x/abstract [retrieved on 2008-11-28]**
- **FAN-CHI LIN ET AL: "High-resolution 3D shallow crustal structure in Long Beach, California: Application of ambient noise tomography on a dense seismic array", GEOPHYSICS, SOCIETY OF EXPLORATION GEOPHYSICISTS, US, vol. 78, no. 4, 1 July 2013 (2013-07-01), pages Q45-Q56, XP001583534, ISSN: 0016-8033, DOI: 10.1190/GEO2012-0453.1 [retrieved on 2013-07-29]**

2

**Description**

**FIELD OF THE DISCLOSURE**

The present invention relates to a method of detecting thawing-induced compaction and deformation in a frozen subsurface geological structure and more particularly to a method for monitoring near-surface structures using Rayleigh waves.

**BACKGROUND OF THE DISCLOSURE**

Rayleigh waves are surface waves that can travel as ripples along or near the surface of the earth. During a seismic survey, seismic sources generate Rayleigh waves along with other types of waves. Classic reflection seismology typically ignores Rayleigh waves because these waves propagate horizontally, have limited depth sensitivity, and exhibit velocity dispersion. For onshore seismic exploration, much effort is concentrated on designing and deploying receiver arrays that can attenuate horizontally traveling surface waves. Moreover, classic seismic approaches for monitoring near surface regions typically require expensive data acquisition using a dense grid of seismic sources and receivers over a period of weeks to month(s). Due to the high cost of data acquisition, continuous or persistent monitoring of the subsurface over a longer period of time is considered unpractical.

Document GB 2467326A discloses the monitoring of structures using passive sources and a surface wave tomography method with Rayleigh waves in a frozen subsurface geological structure.

**SUMMARY OF THE DISCLOSURE**

The invention provides a method of detecting thawing-induced compaction and deformation in a frozen subsurface geological structure as defined in claim 1.

**BRIEF DESCRIPTION OF THE DRAWINGS**

FIG. 1A-B shows embodiments of this disclosure. (A) a seismic source and four lines of receivers are shown; (B) a seismic source and a receiver grid are shown.
FIG. 2 is a flow diagram of the method of this disclosure.

**DETAILED DESCRIPTION**

The present invention provides method and system for monitoring subsurface structure using seismic information from Rayleigh waves. This invention is particularly useful for monitoring near-surface regions to check for containment, near-surface expulsions, leaks, preservation of well integrity, avoidance of well loss or shearing, production anomalies (abrupt changes or discontinuities in recorded seismic data), and the like. The region may be, for example, localized just below the surface but above a hydrocarbon reservoir.

One of the advantages of the present invention is that useful seismic information can be obtained using a sparse acquisition grid. As used herein, the term "sparse acquisition" refers to the total number and/or density of seismic sources and/or receivers used to acquire seismic data. A sparse acquisition grid will generally have far fewer number of sources and/or receivers compared to conventional seismic acquisition grid configurations. The exact number of sources and/or receivers will be application dependent. In some cases, even a single seismic source may be sufficient to generate useful seismic data. The upper limit on the number of seismic sources can be determined empirically. At some point, adding an additional seismic source may not noticeably increase quality of the seismic data. Even at this point, the total number of seismic sources needed should be much fewer compared to conventional techniques.

Currently, seismic sources are relatively expensive while receivers are very inexpensive. In practical terms, the receiver configuration may depend largely on targeted resolution. In general, denser configurations will result in better resolution and accuracy, whereas sparser configurations will be limited to larger structures. Greatly reducing the number of sources can also significantly lower cost because it will reduce the time needed to acquire meaningful seismic data. Because of these cost-efficient benefits, the present invention can provide continuous or frequent monitoring of the subsurface over much longer periods as compared to conventional methods. Other advantages will be apparent from the disclosure herein.

Since the present method does not exclusively rely on Fourier transform techniques to migrate or obtain images, the receiver grid does not have to be uniformly distributed on the field. Moreover, the receivers need not locate at or near, for example, the production anomaly of interest, as long as the anomaly is located between the source and at least one of the receivers. In one embodiment, the receivers are configured around a wellpad. For monitoring purpose, the receivers can be set as mobile unit, or permanently placed in the field for long term monitoring.

The type of seismic source is not limited, as long as the fidelity of signal can be maintained. The source may be any mechanical active source of high- or low frequency energy; moving bulldozers, air gun, dirt whackers, hammer blows, and vibrators have been used. Some discretion is advised as the source must operate for long periods of time, and the physics of what is happening are important. Rayleigh waves have predominantly vertical motion; thus, a source whose impedance is matched to the soil and whose energy is concentrated in the direction and frequency band of interest will be more successful.

The type of receivers is not limited, as long as they can accurately detect and record the seismic waves with low cost. Non-limiting examples of the receivers include geophones, accelerometers, and hydrophones. The propagating seismic energy is recorded as a continuous signal representing displacement, velocity, acceleration, or other recorded variation as a function of time and/or frequency. Multiple combinations of energy source and sensor can be subsequently combined to create a near continuous image of the subsurface that lies beneath the survey area. One or more sets of seismic signals may be assembled in the final seismic survey.

Without being limited by theory, depth sensitivity of the present invention can be governed according to a formula. Assuming seismic shear velocity is approximately 1524 m/s (5000 ft/s), depth sensitivity can be calculated as $(\frac{1524\frac{m}{s}}{frequency})/2$ $((\frac{5000\frac{ft}{s}}{frequency})/2)$, where frequency is central frequency of the Rayleigh wave. The central frequency should generally be selected to be approximately twice the depth of interest. For example, if the Rayleigh wave frequency is 5Hz, depth sensitivity is approximately 152.4 m (500 feet) below the surface. Thus, advancement of seismic source technologies, particularly, low frequency sources, can significantly increase effectiveness of the method. High fidelity, low frequency seismic vibrators, capable of 0.1 Hz, may be on the horizon (capable of 7620 m (25,000 feet) depth sensitivity).

Once seismic data has been acquired, it can be analyzed to estimate or determine either travel time (i.e., absolute time from t = 0) or phase delay (i.e., differential time) of a propagating Rayleigh wave. Rayleigh waves at different frequencies should have different travel times and phase delays because the velocity of Rayleigh wave is dependent on its wavelength (and therefore frequency). This characteristic of Rayleigh waves leads to dispersion when propagating through a non-homogeneous medium. In other words, dispersion refers to the phenomena of waves of different wavelengths spreading out over time. A dispersion curve will be a plot showing the relationship of speed versus frequency.

According to the invention, travel time and/or differential time is estimated or determined at a central frequency of generated Rayleigh waves. This is repeated for a range of central frequencies. The lower frequency range is mainly determined by available seismic source technology. Calculation time(s) can be made at various frequency increments such as, but not limited to, 0.1 Hz, 0.5 Hz, 1 Hz, 2 Hz, 5 Hz, and the like. At each central frequency, a horizontal slice of travel times is obtained. Next, seismic velocity is solved by applying tomography to the slice of travel times for each central frequency slice. The result is slice of seismic velocities for each central frequency slice. Finally, each slice of seismic velocities is inverted to a slice at a depth. This is repeated to generate multiple slices at different depths which is used to construct a 3D model.

The method of the present invention may be carried out continuously or persistently over a longer period of time (e.g., months to years) as compared to some conventional seismic techniques. For example, the method can be carried out, in which seismic data is acquired every day, every few days, weekly, bi-weekly, for months or even years. The use of sparse acquisition grid enables continuous or persistent monitoring to be economically feasible.

Two common methods of data gathering include, but are not limited to, spectral analysis of surface waves (SASW) and multi-channel analysis of surface waves (MASW). These methods use active seismic sources. Active sources include traditional seismic sources that generate sound. The spectral analysis surface wave (SASW) technique typically requires the use of a spectral analyzer. The spectral analyzer is used to study the frequency and phase of signals being recorded. An expanding spread array is useful in minimizing the near field effects of surface waves. An increase in offset distance will result in more time for the waves to reach each geophone, giving the longer wavelengths more time to disperse. The shot gather is modified to minimize the influence of body waves. As the data is gathered, the spectral analyzer is able to generate the dispersion curves for the survey area in real time. The multi-channel analysis of surface waves (MASW) technique can be performed similar to a traditional seismic acquisition whereby there is a geophone spread that is acquiring seismic data. The resulting data is processed by picking out the surface wave arrivals from the acquired distance vs. time plot. Based on the distance vs. time plot, the dispersion curve is created.

In some embodiments, shear velocity can also be obtained and used to build elastic near surface models. For example, log P velocity and density can be used to convert the shear velocity to Poisson Ratio and Young's Modulus. Characterization (e.g., change in shear velocity, P velocity, stress, pressure, of certain common constituents of the earth) of rock samples can be used to link shear velocity changes to elastic property changes, such as stress changes.

**EXAMPLE 1**

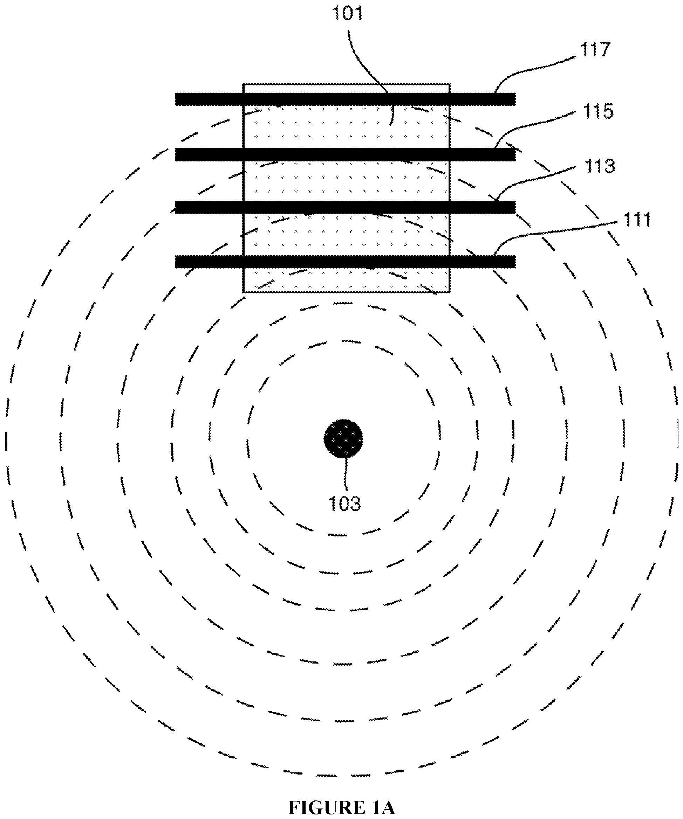

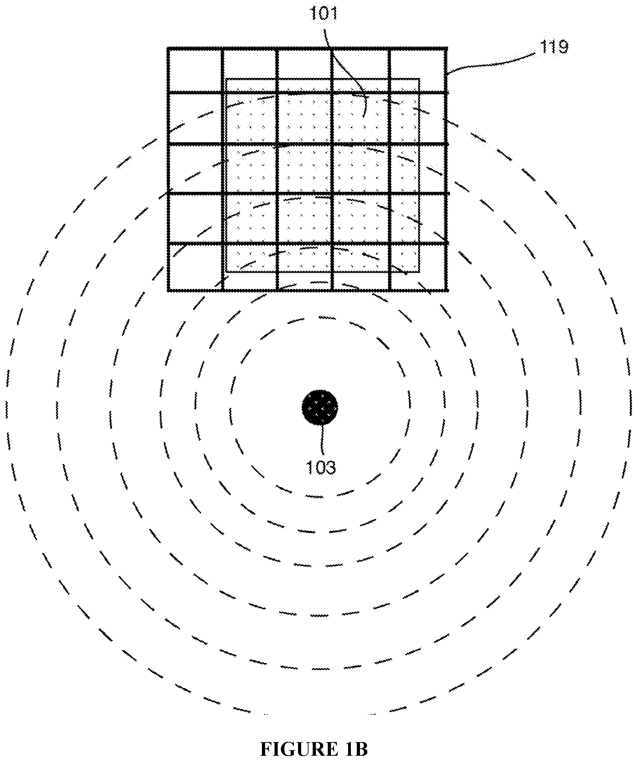

FIG. 1A illustrates an embodiment of the present invention. As shown, production wellpad 101 is under production. Typically, there will be about a dozen injection and production wells on a given wellpad. Seismic source 103 is placed away from the wellpad, whereas first, second, third and fourth lines of receivers 111, 113, 115 and 117, respectively, are placed in parallel directly over the wellpad. The first line of receiver 111 is closest to the seismic source 103, the second line 113 is second closest to the seismic source 103, and so on. An alternative embodiment is illustrated in FIG. 1B, where receiver grid 119 serves a similar function as the lines of receivers 111, 113, 115, 117 in FIG. 1A. The receiver grid 119 covers the entire wellpad. As depicted as dashed circles in FIGS. 1A-1B, the Rayleigh waves are surface waves that propagate like ripples. The seismic source 103 creates shots for a given central frequency. Once generated, seismic waves will propagate until they eventually reach each line of receivers. The receivers record amplitude and travel time of the seismic waves.

While this Example shows a specific number of receiver lines, this is not intended to be limiting. The goal is to obtain sufficient coverage at reasonable cost.

Using the design shown in FIG. 1A, seismic data acquisition was carried out in an area plagued with thawing-induced compaction and deformation that caused significant cost in maintenance and/or drilling new wells to replace the damaged wells. The thawing was more prevalent when steam-assisted production was employed, in which the increased temperature downhole causes the frozen geological structure to thaw. In one real world scenario, the recording from the first line of receivers (L1) did not have any disruption in the recorded seismic data, suggesting that the Rayleigh wave velocity is constant throughout the length between the seismic source and the first receiver line and thus no discernable geological anomalies are present. The recording from the second line (L2) showed a little disruption toward the right side. The disruption was more prominent in the recordings from the third line (L3) and the fourth line (L4). This disruption is an indication that certain geological structure underneath L2-L4 is different from the rest, i.e. has an anomaly, and causing the difference in shear velocities.

The shot records are inverted to map the actual anomalies in terms of changes in velocity. A velocity slice is obtained by tomography at a particular central frequency. For example, tomography from shot records of 15 Hz and 5 Hz at approximately 61 m to 183 m (200 feet and 600 feet) (the sensitive depths at corresponding frequencies) can give an indication of thawing. A typical output is a color-coded velocity profile of the underground structure (at about 61 m to 183 m (200 feet and 600 feet), respectively in this case). A slower velocity area, as compared to surrounding structure, would indicate phase change in the area. A 2D tomographic slice can show that geological structure around injectors and producers is different from the rest of the formation due to the hydrocarbon mobilized by the injected steam.

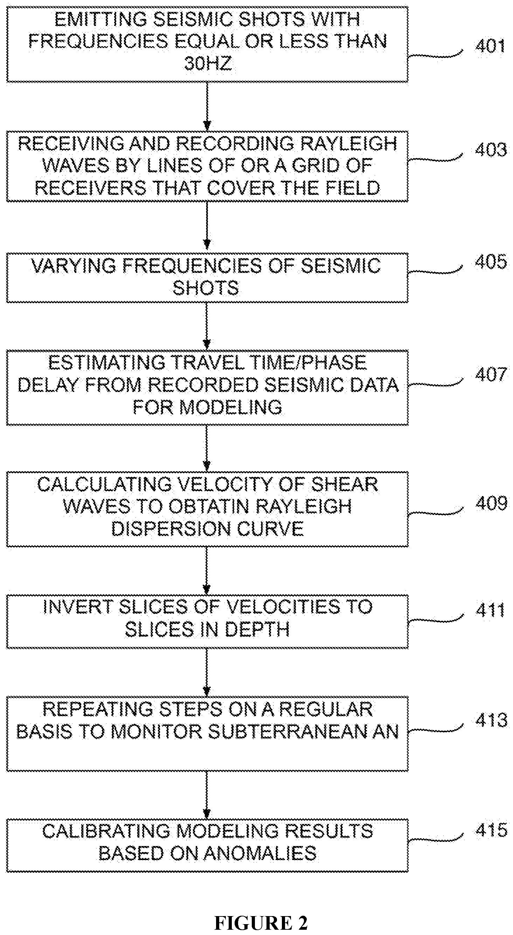

FIG. 2 illustrates the flow diagram of the disclosed method. The method is based on the configuration in FIG. 1. In step 401, seismic shots are emitted from the seismic source. Considering sensitive depth, the frequencies below 30 Hz are typically chosen.

The source may be a regular seismic vibrator mounted on a truck, an air gun, or even a heavy truck that passes by and creates some vibration. As long as the distance and travel time between the source and the receivers can be determined to measure the velocity.

In step 403, the Rayleigh waves are received and recorded by receivers. In the illustrated embodiment shown in FIG. 1, the receivers are geophones, and each line has 144 geophones spaced by 3 m (10 feet) apart. Each line is 30 m (100 feet) away from the next line of receivers, and the first line is 60 m (200 feet) away from the seismic source. Of course, these numbers are exemplary only, and other distances could be used based on the reservoir characteristics and available resources. In another embodiment as shown in FIG. 1B, a grid of receivers is configured, and the receivers can be configured non-uniformly because the use of Rayleigh wave for anomaly detection is not dependent on Fourier Transform to migrate or to obtain image for modeling. As long as the receivers are configured to adequately cover the field, the rest can be calculated readily.

In step 405, the frequency of the energy source is varied so as to generate waves of different wavelengths. The frequency can be changed in 1Hz increments until the maximum frequency is reached. In one embodiment, the maximum frequency is 20Hz, and therefore shot records of 20 different frequencies can be obtained. In one embodiment, the frequency can vary in 2Hz, 3Hz, 5Hz or 10Hz increments. However, skilled artisan can understand that even 1 single shot at a fixed frequency may be sufficient to obtain velocity modeling of the underground structure.

In step 407, estimate either the travel time (absolute time from emitting the shot to receiving signal at receivers) or phase delay (which is differential times) from the acquired seismic data. For each different frequency there will be a different phase delay. Also, by incremental change to the frequency, horizontal slice of travel times unique to each frequency can be obtained. In other words, for each frequency used, a frequency-specific phase delay and/or horizontal slice will be available for tomography.

In step 409, seismic velocity of shear waves for each slice is determined by tomography. The results are slices of velocities for each frequency. The dispersion curve as shown in FIG. 2 is therefore obtained.

In step 411, the slices of velocities are inverted to slices of depth for each frequency by dispersion inversion. The method of inversion is not limited, and can be any inversion method that is used by a skilled person in the art. Non-limiting methods of inversion include phase delay or Frequency-Time Analysis (FTAN) method. Alternatively, inversion of velocity, horizontal tomography can also be obtained depending on the actual need.

In step 413, the whole process is repeated again after a period of time for long-term monitoring purpose. In one embodiment, the whole process is performed once a week. By comparing the slices of depth for each frequency over a long period of time, one can easily determine whether there is an anomaly, the location of it, and the progression thereof. If necessary, the location of seismic source and the lines of receivers can be changed so as to more accurately pinpoint the location of anomaly. For example, instead of one single seismic source, one can set up two seismic sources at opposite ends of the lines of receivers. Or alternatively, the entire setting can be rotated 90° to conduct the survey from a different angle to narrow down the actual location of the anomalies.

In one example of determining velocity of traveltimes, to implement group velocity tomography, we use the PRONTO tomography code described by Aldridge and Oldenburg (1993). The algorithm is based on a finite-difference solution of the Eikonal equation and solves the inverse problem using a weighted-damped least-squares scheme. Originally designed for crosswell tomography, the 2D code is easily adapted to build Rayleigh wave group velocity maps.

Finally, in step 415 the shot records and modeling results are compared and calibrated.

By setting up the seismic survey system as disclosed herein, inventors were able to continue monitoring the underground structure with as few as one shot per week, as opposed to thousands of shots with conventional reflective seismic survey. The sparse shot and the significant saving on operation cost is the benefit of using Rayleigh wave as the long-term monitoring of subterranean anomalies.

Although in this example the disclosed system and method is used to detect thawing-related problems, the same methodology can be applied in examples not being part of the invention to other underground structures or anomalies. For example, if the monitoring shows that an underground water reservoir is depleting at a fast pace without sufficient supply, this could be an early sign of deformation or compaction.

With the disclosed method and system, long term monitoring of underground structure is economically appealing as opposed to the reflective seismic survey where thousands of shots are required for accurate modeling and imaging.

As used herein, "FTAN (Frequency Time Analysis) method" refers to the method based on the study of surface wave (both Rayleigh and Love) group velocities and is successfully used in seismology. This method employs a system of narrow-band Gaussian filters, with varying central frequency, that do not introduce phase distortion and give a good resolution in the time-frequency domain. For each filter band the square amplitude of the inverse FFT of the filtered signal is the energy carried by the central frequency component of the original signal. Because the arrival time is inversely proportional to group velocity, the energy can be obtained as a function of group velocity at a specific frequency for known distance. After repeating the process in different frequencies, a FTAN map can be obtained. A FTAN map is the image of a matrix, in which the columns represent the energy values at a certain period and the rows represent the energy values at constant group velocity. A sequence of frequency filters and time window is applied to the dispersion curve for an easy extraction of the fundamental mode. The floating filtering technique, combined to a phase equalization, permits to isolate the fundamental mode from the higher modes. FTAN is useful in defining VS profiles of shallow geological structures.

As used herein, a "disruption" or "anomaly" refers to an abrupt change or discontinuity in recorded seismic data or a processed form thereof. Example of a disruption is seen in FIG. 2, which shows recorded raw seismic data (arrows indicating disruption).

The use of the word "a" or "an" when used in conjunction with the term "comprising" in the claims or the specification means one or more than one, unless the context dictates otherwise.

The term "about" means the stated value plus or minus the margin of error of measurement or plus or minus 10% if no method of measurement is indicated.

The use of the term "or" in the claims is used to mean "and/or" unless explicitly indicated to refer to alternatives only or if the alternatives are mutually exclusive.

The terms "comprise", "have", "include" and "contain" (and their variants) are open-ended linking verbs and allow the addition of other elements when used in a claim.

The phrase "consisting of" is closed, and excludes all additional elements.

The phrase "consisting essentially of" excludes additional material elements, but allows the inclusions of non-material elements that do not substantially change the nature of the invention.

The following abbreviations are used herein:

| ABBREVIATION | TERM |
| --- | --- |
| Hz | Hertz |

(continued)

| ABBREVIATION | TERM |
| --- | --- |
| FTAN | Frequency time analysis |
| AVO | Amplitude variation with offset-a general term for referring to the dependency of the seismic attribute, amplitude, with the distance between the source and receiver (the offset) |
| NMO | Normal move out-describes the effect that the distance between a seismic source and a receiver (the offset) has on the arrival time of a reflection in the form of an increase of time with offset |
| FWI | full-waveform inversion |

**REFERENCES**

The following references are considered as prior art:

1) Haney M.M., & Douma, H., IMAGING LATERAL HETEROGENEITY AT CORONATION FIELD WITH SURFACE WAVES, available at www.cwp.mines.edu/~huub/pubs/mhaney_SEG_2010.pdf.
2) Haney M.M. & Douma, H., RAYLEIGH WAVE TOMOGRAPHY AT CORONATION FIELD, CANADA: THE TOPOGRAPHY EFFECT
3) McMechan, G.A., and Yedlin, M.J., Analysis of dispersive waves by wave-field transformation: Geophysics, v. 46, p. 869-874 (1981).
4) Park, et al., Imaging dispersion curves of surface waves on multichannel record: 68th Annual International Meeting, Society of Exploration Geophysics, Expanded Abstracts, p. 1377-1380 (1998).
5) Lin F.C. et al., Eikonal tomography: surface wave tomography by phase front tracking across a regional broad-band seismic array, Geophys. J. Int. 177, 1091-1110 (2009).
6) US8892410
7) US20080294393
8) US7330799

**Claims**

1. A method of detecting thawing-induced compaction and deformation in a frozen subsurface geological structure by monitoring the frozen subsurface geological structure, the method comprising:

   a) obtaining seismic data relating to the frozen subsurface geological structure, comprising emitting seismic shots from a seismic source (401), wherein the frequency is varied until a maximum frequency of 20Hz is reached (405); and receiving and recording Rayleigh waves by lines of or a grid of receivers (403);
   b) estimating travel time or phase delay or both of Rayleigh waves in the seismic data at a central frequency (407) to provide a frequency-specific phase delay and/or horizontal slice of travel time;
   c) determining the seismic velocity of shear waves for each slice by tomography to obtain a slice of seismic velocity at the central frequency (409);
   d) repeating steps b) to c) for a range of central frequencies; and
   e) inverting the slices of velocities to slices of depth for the range of central frequencies by dispersion inversion (411) to obtain 3-D velocity cube in depth;
   and
   f) repeating steps a) to e) after a period of time and comparing the slices of depth over the period of time to determine the presence of the anomaly, the location of the anomaly, and the progression of the anomaly (413); wherein the anomaly is indicating a thawing induced compaction and deformation and is identified with a slower velocity compared to surrounding structure.

2. The method of claim 1, wherein the subsurface structure includes a near surface layer over a hydrocarbon production reservoir.

3. The method of claim 1, wherein the seismic data is obtained using a sparse acquisition grid that includes between about 1 to about 25 seismic sources.

**4.** The method of claim 1, wherein the seismic data is obtained using a non-uniform grid of seismic sources.

**5.** The method of claim 1, wherein the seismic data is obtained using a non-uniform grid of seismic receivers.

**6.** The method of claim 1, wherein the monitoring is continuous for at least about one month, optionally at least about a year.

**Patentansprüche**

**1.** Verfahren zum Erkennen einer durch Auftauen verursachten Verdichtung und Verformung in einer gefrorenen geologischen Untergrundstruktur durch Überwachung der gefrorenen geologischen Untergrundstruktur, wobei das Verfahren Folgendes umfasst:

a) Erhalten seismischer Daten in Bezug auf die gefrorene geologische Untergrundstruktur, umfassend Aussenden seismischer Schüsse von einer seismischen Quelle (401), wobei die Frequenz variiert wird, bis eine maximale Frequenz von 20 Hz erreicht (405) wird; und Empfangen und Aufzeichnen von Rayleigh-Wellen durch Zeilen oder ein Gitter von Empfängern (403);
b) Schätzen der Laufzeit oder Phasenverzögerung oder beider der Rayleigh-Wellen in den seismischen Daten bei einer zentralen Frequenz (407), um eine frequenzspezifische Phasenverzögerung und/oder einen horizontalen Schnitt der Reisezeit bereitzustellen;
c) Bestimmen der seismischen Geschwindigkeit von Scherwellen für jeden Schnitt durch Tomographie, um einen Schnitt seismischer Geschwindigkeit bei der zentralen Frequenz (409) zu erhalten;
d) Wiederholen der Schritte b) bis c) für einen Bereich zentraler Frequenzen;
und
e) Invertieren der Geschwindigkeitsschnitte in Tiefenschnitte für den Bereich zentraler Frequenzen durch Dispersionsumkehr (411), um einen dreidimensionalen Geschwindigkeitswürfel in Tiefe zu erhalten; und
f) Wiederholen der Schritte a) bis e) nach einer Zeitspanne und Vergleichen der Tiefenschnitte über die Zeitspanne, um das Vorhandensein der Anomalie, den Ort der Anomalie und das Fortschreiten der Anomalie (413) zu bestimmen; wobei die Anomalie eine durch das Auftauen verursachte Verdichtung und Verformung angibt und mit einer geringeren Geschwindigkeit im Vergleich zur umgebenden Struktur identifiziert wird.

**2.** Verfahren nach Anspruch 1, wobei die Untergrundstruktur eine oberflächennahe Schicht über einem Kohlenwasserstoff-Produktionsreservoir einschließt.

**3.** Verfahren nach Anspruch 1, wobei die seismischen Daten unter Verwendung eines spärlichen Erfassungsgitters erhalten werden, das zwischen etwa 1 bis etwa 25 seismische Quellen einschließt.

**4.** Verfahren nach Anspruch 1, wobei die seismischen Daten unter Verwendung eines ungleichen Gitters seismischer Quellen erhalten werden.

**5.** Verfahren nach Anspruch 1, wobei die seismischen Daten unter Verwendung eines ungleichen Gitters seismischer Empfänger erhalten werden.

**6.** Verfahren nach Anspruch 1, wobei die Überwachung mindestens etwa einen Monat, optional mindestens etwa ein Jahr lang kontinuierlich erfolgt.

**Revendications**

**1.** Procédé de détection d'un compactage et d'une déformation induits par dégel dans une structure géologique souterraine gelée par surveillance de la structure géologique souterraine gelée, le procédé comprenant :

a) l'obtention de données sismiques relatives à la structure géologique souterraine gelée, comprenant l'émission de tirs sismiques à partir d'une source sismique (401), dans lequel la fréquence varie jusqu'à ce qu'une fréquence maximale de 20 Hz soit atteinte (405) ; et la réception et l'enregistrement d'ondes de Rayleigh par des lignes ou une grille de récepteurs (403) ;
b) l'estimation du temps de trajet et/ou du retard de phase des ondes de Rayleigh dans les données sismiques à une fréquence centrale (407) pour fournir un retard de phase spécifique à une fréquence et/ou une tranche horizontale de temps de trajet ;

c) la détermination de la vitesse sismique d'ondes de cisaillement pour chaque tranche par tomographie pour obtenir une tranche de vitesse sismique à la fréquence centrale (409) ;

d) la répétition des étapes b) à c) pour une plage de fréquences centrales ; et

e) l'inversion des tranches de vitesses en tranches de profondeur pour la plage de fréquences centrales par inversion de dispersion (411) pour obtenir un cube de vitesse 3D en profondeur ; et

f) la répétition des étapes a) à e) après une période de temps et la comparaison des tranches de profondeur sur la période de temps pour déterminer la présence de l'anomalie, l'emplacement de l'anomalie et la progression de l'anomalie (413) ; dans lequel l'anomalie indique un compactage et une déformation induits par dégel et est identifiée avec une vitesse plus lente par comparaison à la structure environnante.

2. Procédé selon la revendication 1, dans lequel la structure souterraine inclut une couche proche de la surface au-dessus d'un réservoir de production d'hydrocarbures.

3. Procédé selon la revendication 1, dans lequel les données sismiques sont obtenues en utilisant une grille d'acquisition clairsemée qui comprend entre environ 1 et environ 25 sources sismiques.

4. Procédé selon la revendication 1, dans lequel les données sismiques sont obtenues en utilisant une grille non uniforme de sources sismiques.

5. Procédé selon la revendication 1, dans lequel les données sismiques sont obtenues en utilisant une grille non uniforme de récepteurs sismiques.

6. Procédé selon la revendication 1, dans lequel la surveillance est continue pendant au moins environ un mois, éventuellement au moins environ un an.

**FIGURE 1A**

**FIGURE 1B**

```
┌─────────────────────────────┐
│  EMITTING SEISMIC SHOTS WITH │
│ FREQUENCIES EQUAL OR LESS THAN│ ──── 401
│            30HZ              │
└─────────────────────────────┘
              │
              ▼
┌─────────────────────────────┐
│ RECEIVING AND RECORDING RAYLEIGH│
│  WAVES BY LINES OF OR A GRID OF │ ──── 403
│ RECEIVERS THAT COVER THE FIELD │
└─────────────────────────────┘
              │
              ▼
┌─────────────────────────────┐
│  VARYING FREQUENCIES OF SEISMIC │ ──── 405
│            SHOTS             │
└─────────────────────────────┘
              │
              ▼
┌─────────────────────────────┐
│  ESTIMATING TRAVEL TIME/PHASE │
│ DELAY FROM RECORDED SEISMIC DATA│ ──── 407
│          FOR MODELING        │
└─────────────────────────────┘
              │
              ▼
┌─────────────────────────────┐
│  CALCULATING VELOCITY OF SHEAR │
│  WAVES TO OBTATIN RAYLEIGH   │ ──── 409
│      DISPERSION CURVE        │
└─────────────────────────────┘
              │
              ▼
┌─────────────────────────────┐
│  INVERT SLICES OF VELOCITIES TO │ ──── 411
│        SLICES IN DEPTH       │
└─────────────────────────────┘
              │
              ▼
┌─────────────────────────────┐
│  REPEATING STEPS ON A REGULAR │
│ BASIS TO MONITOR SUBTERRANEAN AN│ ──── 413
└─────────────────────────────┘
              │
              ▼
┌─────────────────────────────┐
│  CALIBRATING MODELING RESULTS │ ──── 415
│       BASED ON ANOMALIES     │
└─────────────────────────────┘
```

**FIGURE 2**

## REFERENCES CITED IN THE DESCRIPTION

### Patent documents cited in the description

- GB 2467326 A
- US 8892410 B
- US 20080294393 A
- US 7330799 B

### Non-patent literature cited in the description

- **HANEY M.M ; DOUMA, H.** *IMAGING LATERAL HETEROGENEITY AT CORONATION FIELD WITH SURFACE WAVES,* www.cwp.mines.edu/~huub/pubs/mhaney_SEG_2010.pdf.
- **HANEY M.M. ; DOUMA, H.** *RAYLEIGH WAVE TOMOGRAPHY AT CORONATION FIELD, CANADA: THE TOPOGRAPHY EFFECT*
- **MCMECHAN, G.A ; YEDLIN, M.J.** Analysis of dispersive waves by wave-field transformation. *Geophysics,* 1981, vol. 46, 869-874
- **PARK et al.** Imaging dispersion curves of surface waves on multichannel record: 68th Annual International Meeting. *Society of Exploration Geophysics, Expanded Abstracts,* 1998, 1377-1380
- **LIN F.C. et al.** Eikonal tomography: surface wave tomography by phase front tracking across a regional broad-band seismic array. *Geophys. J. Int.,* 2009, vol. 177, 1091-1110